Europäisches Patentamt

European Patent Office

Office européen des brevets

(11) Veröffentlichungsnummer: **0 227 964**
**A1**

(12) # EUROPÄISCHE PATENTANMELDUNG

(21) Anmeldenummer: 86116610.6

(22) Anmeldetag: 28.11.86

(51) Int. Cl.⁴: **A47J 37/06** , F24C 3/04

(30) Priorität: 11.12.85 DE 8534756 U

(43) Veröffentlichungstag der Anmeldung:
08.07.87 Patentblatt 87/28

(84) Benannte Vertragsstaaten:
AT BE CH DE FR GB IT LI NL

(71) Anmelder: **Ueberle, Günter**
**Hauptstrasse 223**
**D-6900 Heidelberg(DE)**
Anmelder: **Ueberle, Peter**
**Hauptstrasse 223**
**D-6900 Heidelberg(DE)**

(72) Erfinder: **Ueberle, Günter**
**Hauptstrasse 223**
**D-6900 Heidelberg(DE)**
Erfinder: **Ueberle, Peter**
**Hauptstrasse 223**
**D-6900 Heidelberg(DE)**

(74) Vertreter: **Ullrich, Thurmod, Dr.**
**Gaisbergstrasse 3**
**D-6900 Heidelberg(DE)**

(54) **Gasgrillgerät.**

(57) Die Erfindung betrifft ein Gasgrillgerät mit einem Gehäuse-Unterteil (2) und Oberteil (3), bei dem die in einem Einschubteil (4) untergebrachten Gasbrenner (5) der Brennkammer (10) nach unten von einer Isoliersteinschicht (9) und nach oben von Tragröhrchen (11) begrenzt ist, die ihre Wärme über den Wärmeübergangsraum (13) mit Lufteintrittsdüsen (17) gleichmäßig verteilt und gleichbleibend auf den Grillrost (14) übertragen, wobei die Zündung der Brenner (5) mit Hilfe einer elektronischen Steuerung (19) mit Sensor (18) über eine mit einem Piezozünder (7) ausgestattete Zündkerze (8) erfolgt.

Die Brenneranlage ist so angeordnet und angelegt, daß eine optimale Grillfläche mit einer absolut gleichmäßigen Wärmeabstrahlung bei gleichbleibenden Temperaturen erzielt wird, was mit Grillgeräten herkömmlicher Art nicht erreicht werden kann.

Abb.1

## Gasgrillgerät

Die Erfindung betrifft ein Gasgrillgerät mit einem Gehäuse-Unterteil und einem die Heizeinrichtung aufnehmenden Oberteil.

Unter Grillen oder Grillieren versteht man das Rösten von Lebensmitteln, d.h. meist tierischen Lebensmitteln wie Fleisch, Fisch, Geflügel und dergleichen auf einem Gitterrost oder auch am Spieß. Die Beheizung kann durch Holzkohle, Gas, Heißluft, Infrarotstrahlung usw. erfolgen.

Die auf dem Markt befindlichen Gasgrillgeräte weisen hinsichtlich ihrer Qualität erhebliche Mängel auf, weil die Wärmeabstrahlung recht ungleichmäßig erfolgt, sie halten die Temperatur nicht gleichbleibend und arbeiten nicht abgasarm.

Die Aufgabe der Erfindung besteht nun darin ein Gasgrillgerät vorzuschlagen, dessen Brenneranlage so ausgelegt ist, daß eine optimale Grillfläche mit völlig gleichmäßiger Wärmeabstrahlung bei gleichbleibenden Temperaturen erreicht wird.

Die Lösung dieser Aufgabe wird durch die technische Lehre vermittelt, daß die in einem ausziehbaren Einschubteil untergebrachten Gasbrenner für die Brennkammer nach unten von einer Isoliersteinschicht und nach oben von Tragröhrchen begrenzt sind, auf denen eine Packung Heizsteine angeordnet ist, die ihre Wärme über den Wärmeübergangsraum mit Lufteintrittsdüsen gleichmäßig verteilt und gleichbleibend auf den Grillrost übertragen, wobei die Zündung der Brenner mit Hilfe einer elektronischen Steuerung mit Sensor über eine mit einem Piezozünder ausgestattete Zündkerze erfolgt.

In einer speziell isolierten Brennkammer beliebiger Ausmaße wird durch Verbrennung eine Temperatur von mindestens 1200°C bis maximal 1600°C erzeugt.

Mittels dieser hohen Temperatur werden hitzebeständige Steine, welche die Brennkammer nach obenhin abdecken, gleichmäßig erwärmt. Die Steine erreichen an ihrer Oberfläche eine Temperatur von ca. 1000°C. Über den Steinen ist ein Grillrost angebracht, auf welchem Fleisch, Wurst oder Speisen, die zum Grillieren geeignet sind, aufgelegt werden. Im Gegensatz zu Grillgeräten der herkömmlichen Art, wird die gesamte Grillfläche immer mit gleich hoher Temperatur versorgt und somit kann die komplette Fläche dauernd benutzt werden. Durch die hohe Temperatur ist gewährleistet, daß sich die Poren des Grillgutes sofort verschließen und das Austrocknen desselben unmöglich ist.

Das herabtropfende Fett verbrennt sofort auf den erhitzten Steinen. Ein zuschaltbares Gebläsesystem mit seitlichen Luftdüsen, welche zwischen dem Grillrost und den Steinen angeordnet sind, bewirkt, daß entstehende Flammen sofort gelöscht werden. Dadurch ist ein An-oder Verbrennen des Grillgutes ausgeschlossen, da angebranntes Fleisch bitter schmeckt und gesundheitsschädlich ist. Die Gasheizung erzielt bei niedrigstem Energieaufwand beste Ergebnisse, ist umweltfreundlich und betriebssicher.

Eine Ausführungsform der Erfindung ist in der Zeichnung schematisch dargestellt.

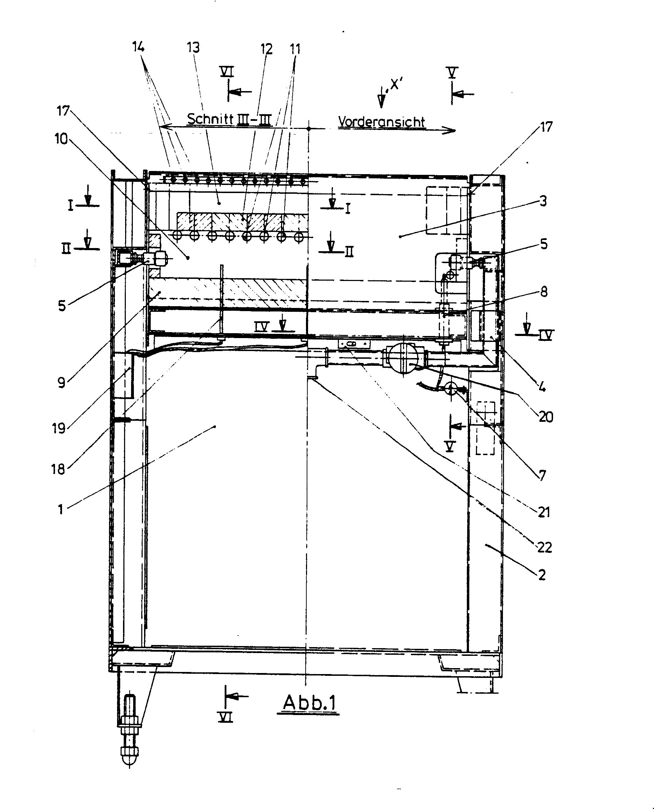

Fig. 1 zeigt das Gerät 1 von vorne gesehen, wobei die linke Seite aufgeschnitten ist. Das Gerät besteht aus einem Unterteil 2 und einem Oberteil 3. Beide Teile sind durch eine Schraubverbindung verbunden. Das Oberteil 3, welches den gesamten technischen Apparat beherbergt, kann auch als Einbau oder Tischgerät benutzt werden. In der Brennkammer 10, welche nach unten und an den vier Seiten mit hitzebeständigen Isoliersteinen 9 abgesichert ist, wird durch die Gasbrenner 5 die notwendige Betriebshitze erzeugt. Die Brennkammer 10 ist nach oben hin durch Heizsteine 12, welche durch auf Stützsteine 15 gelagerte Trageröhrchen 11 aus Keramik gehalten werden, abgedeckt. Die Gasbrenner 5 sind an den Seiten des Brennereinschubs 4 montiert. An dem Brennereinschub 4 sind alle gastechnischen Teile montiert, um im Falle einer Reparatur das komplette Teil auswechseln zu können. Oberhalb der Heizsteine 12 befindet sich der Wärmeübertragungsraum 13, der den nötigen Abstand zwischen den Heizsteinen 12 und dem Grillrost 14, auf welchem das Grillgut - (Fleisch, Wurst, Fisch usw.) liegt, herstellt.

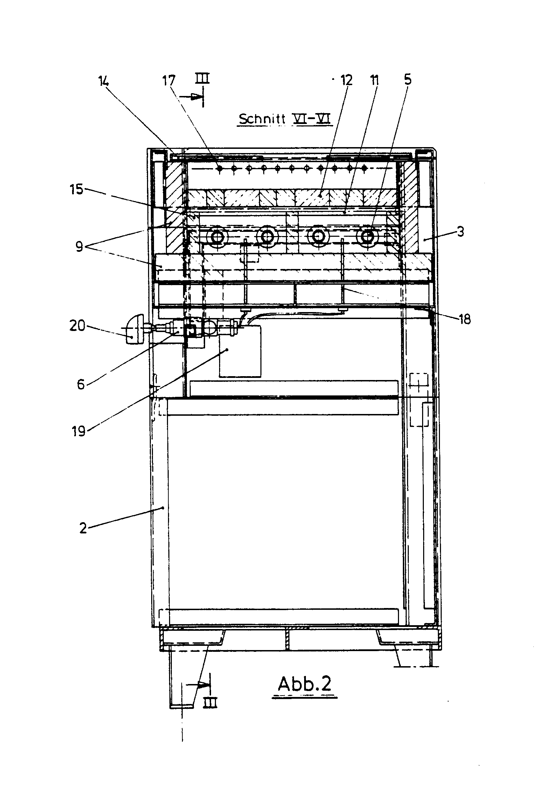

Fig. 2 zeigt das Gerät 1 mit Oberteil 3 und Unterteil 2 in Seitenansicht. Hierbei ist nochmals genau die Anordnung der Brenner 5, der Isolation 9, der Stützsteine 15, der Trageröhrchen 11, der Heizsteine 12, sowie des Grillrostes 14 zu sehen.

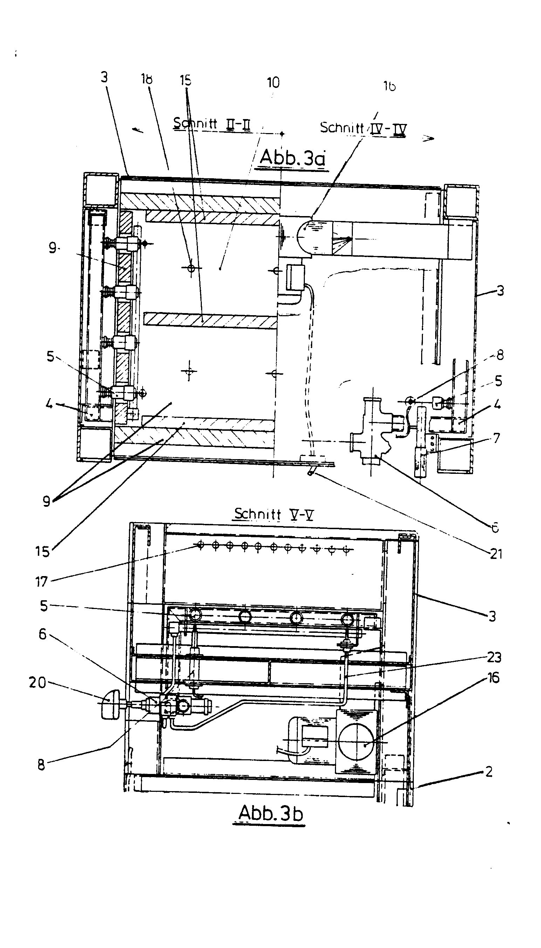

Fig. 3a zeigt auf der linken Seite die Brennkammer 10 mit der Isolation 9, der Anordnung der Stützsteine 15, der Brenner 5, sowie dem Brennereinschub 4. Auf der rechten Seite sind gastechnische Teile zu sehen, welche unter dem Boden des Oberteils 3 angebracht sind.

Fig. 3b zeigt einen Querschnitt des Brennereinschubes 4. Außerdem sind die Lufteintrittsdüsen 17, die mit Druckluft durch das Gebläse 16 versorgt werden, zu sehen, und schließlich zeigt

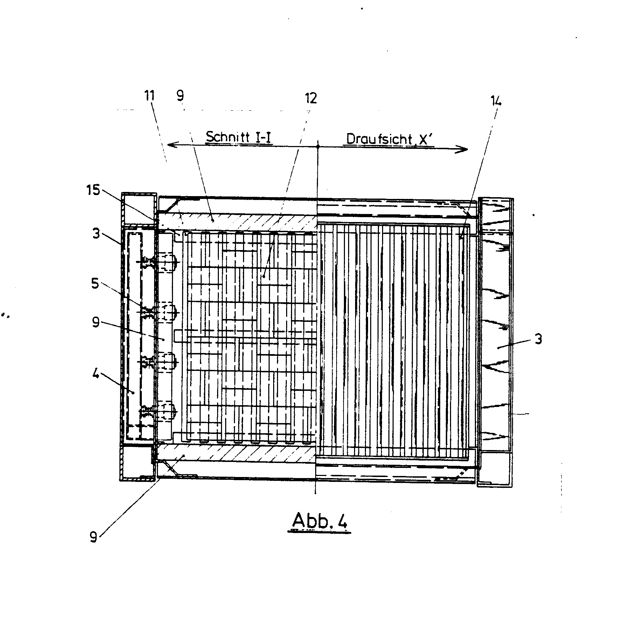

Fig. 4 auf der linken Seite die schematische Anordnung der Heizsteine 12, sowie den Grillrost 14.

Nachdem das erfindungsgemäße Gerät fachmännisch angeschlossen und auf Dichtheit überprüft ist, kann der Zündvorgang eingeleitet werden, indem der Reglerknopf 20 am Regler 6 in Zündstellung gebracht und zur Überbrückung der Zündsicherung eingedrückt wird, vorgenommen werden. Die Zündsicherung ist in dem Regler 6 eingebaut und wird durch den Thermofühler 23 gesteuert. Durch Überbrückung der Zündsicherung kann am Brenner 5 (rechte Seite) die Menge Gas ausströmen, die zum Betrieb der Zündflamme notwendig ist. Durch Drücken des PiezoZünders 7 wird über die Zündkerze 8 der Brenner 5 in Betrieb genommen. Nun strömt die durch die Gasbrenner 5 erzeugte Hitze in die Brennkammer 10. Die starke Verbrennungshitze steigt mit großer Geschwindigkeit nach oben und bringt die auf den Trageröhrchen 11 lagernden Heizsteine 12 zum Glühen. Wenn die Heizsteine 12 ihre Betriebstemperatur erreicht haben, was nur am Glühen derselben zu erkennen ist, wird mittels des Reglerknopfes 20 durch eine Vierteldrehung nach links, der Gasfluß halbiert. Diese Gasmenge reicht aus, um die Heizsteine 12 am Glühen zu erhalten. Dann kann mit dem Grillieren Speisen auf dem Grillrost 14 begonnen werden.

## Ansprüche

1. Gasgrillgerät (1) mit einem Gehäuse-Unterteil (2) und einem die Heizeinrichtung aufnehmenden Oberteil (3), dadurch gekennzeichnet, daß die in einem ausziehbaren Einschubteil (4) untergebrachten Gasbrenner (5) für die Brennkammer (10) nach unten von einer Isoliersteinschicht (9) und nach oben von Tragröhrchen (11) begrenzt ist, die ihre Wärme über den Wärmeübergangsraum (13) mit Lufteintrittsdüsen (17) gleichmäßig verteilt und gleichbleibend auf den Grillrost (14) übertragen, wobei die Zündung der Brenner (5) mit Hilfe einer elektronischen Steuerung (19) mit Sensor (18) über eine mit einem Piezozünder (7) ausgestattete Zündkerze (8) erfolgt.

2. Gerät nach Anspruch 1, dadurch gekennzeichnet, daß die Trageröhrchen (11) mit den Heizsteinen (12) durch die Stützsteine (15) getragen werden.

3. Gerät nach Anspruch 1 und 2, dadurch gekennzeichnet, daß in dem ausziehbaren Brennereinschub (4) alle gastechnischen Teile montiert sind.

4. Gerät nach Anspruch 1 bis 3, dadurch gekennzeichnet , daß die Zündung der Brenner (5) über den mit Thermofühler (23) ausgestatteten Regler (6) erfolgt.

5. Gerät nach Anspruch 1 bis 4, dadurch gekennzeichnet, daß es ein zuschaltbares Gebläsesystem (16) mit Düsen (17) zwischen Grillrost (14) und den Heizsteinen (12) besitzt.

0 227 964

Schnitt III–III     Vorderansicht

Abb.1

Schnitt VI-VI

Abb.2

Abb. 3a

Schnitt II-II

Schnitt IV-IV

Schnitt V-V

Abb. 3b

Abb. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 848 990 (HAEDIKE et al.)<br><br>* Das ganze Dokument *<br><br>--- | 1,2,4,5 | A 47 J 37/06<br>F 24 C 3/04 |
| X | US-A-3 090 373 (YAGLEY et al.)<br>* Das ganze Dokument *<br><br>--- | 1,5 | |
| A | WO-A-8 203 544 (BERG)<br>* Seite 5, Zeilen 9-11; Figur 1 *<br><br>--- | 1 | |
| A | US-A-4 321 857 (BEST)<br>* Figuren 4-6; Spalte 5, Zeilen 10-50; Spalte 7, Zeilen 12-14 *<br><br>--- | 1 | |
| A | US-A-3 241 542 (LOTTER)<br>* Das ganze Dokument *<br><br>--- | 1,4,5 | RECHERCHIERTE SACHGEBIETE (Int. Cl.4) |
| A | US-A-2 283 853 (FRICK)<br>* Seite 2, linke Spalte, Zeilen 66-71; Figuren 1,2 *<br><br>----- | 1 | A 47 J<br>F 24 C |

Der vorliegende Recherchenbericht wurde für alle Patentansprüche erstellt.

| Recherchenort | Abschlußdatum der Recherche | Prüfer |
|---|---|---|
| DEN HAAG | 19-03-1987 | SCHARTZ J. |